# FASCICULE DE BREVET EUROPEEN

(11) **EP 3 888 353 B1**
(45) Date de publication et mention de la délivrance du brevet: **14.06.2023**
(21) Numéro de dépôt: 19818237.0
(22) Date de dépôt: 08.11.2019
(51) Int. Cl.: H04N 17/00

(54) **PROCÉDÉ DE RÉGLAGE D'UN DISPOSITIF DE RÉTROVISION NUMÉRIQUE D'UN VÉHICULE**
VERFAHREN FÜR DIE EINSTELLUNG EINER DIGITALEN RÜCKSPIEGELVORRICHTUNG EINES FAHRZEUGS
METHOD FOR ADJUSTING A DIGITAL REARVIEW DEVICE OF A VEHICLE

(30) Priorité: 27.11.2018 FR 1871958
(43) Date de publication de la demande: 06.10.2021
(73) Titulaire: PSA Automobiles SA, 78300 Poissy (FR)
(72) Inventeur: PERRIER, Lionel, 78000 Versailles (FR); POULET, Manuel, 92290 Chatenay Malabry (FR)
(86) Numéro de dépôt international: PCT/FR2019/052672
(87) Numéro de publication internationale: WO 2020/109692

(56) Documents cités:
- EP-A1- 3 107 068
- WO-A1-2014/045344
- WO-A1-2017/025681
- US-A1- 2016 311 374

## Description

### Domaine technique de l'invention

L'invention concerne le réglage des dispositifs de rétrovision numérique qui équipent certains véhicules.

### Etat de la technique

Certains véhicules (éventuellement de type automobile) comprennent un dispositif de rétrovision numérique comprenant une caméra arrière et un écran d'affichage, et destiné à remplacer l'habituel rétroviseur central intérieur. Cela peut par exemple être le cas des véhicules comprenant une partie arrière masquant intégralement leur environnement arrière ou dans laquelle la lunette arrière ou la vitre du hayon a une petite surface.

La caméra arrière est positionnée dans une partie arrière du véhicule afin d'acquérir des images numériques d'une partie de son environnement arrière. Par exemple, cette caméra (arrière) peut être solidarisée à l'extrémité arrière du toit (ou pavillon) du véhicule ou sur partie de la carrosserie qui est orientée vers l'arrière du véhicule et pleine au lieu de comporter une vitre (de hayon ou de lunette arrière ou encore de porte).

L'écran d'affichage est agencé de manière à afficher au moins une partie choisie des images qui sont acquises par la caméra (arrière). Cet écran d'affichage est installé dans l'habitacle du véhicule en vue directe du conducteur, par exemple à l'endroit où est habituellement installé le rétroviseur central intérieur. Mais il pourrait être installé dans ou sur la planche de bord du véhicule ou bien il pourrait s'agir d'une partie du pare-brise située devant le conducteur et associée à un dispositif d'affichage dit « tête haute ». Ainsi, le conducteur du véhicule dispose d'une image numérique qui est à chaque instant représentative de l'environnement arrière de son véhicule, comme si ce dernier était équipé d'un rétroviseur central intérieur.

Pour que les images numériques affichées soient équivalentes aux images réelles qu'afficherait le miroir d'un rétroviseur central intérieur, il est indispensable que le dispositif de rétrovision numérique soit réglé de façon très précise. On comprendra en effet qu'un positionnement de la caméra d'un véhicule légèrement différent d'un positionnement de référence prédéfini fournira des images légèrement décalées verticalement et/ou horizontalement et/ou légèrement désorientées (ou inclinées). De même, si le calculateur, associé à l'écran d'affichage et recevant les fichiers définissant les images acquises par la caméra, extrait dans ces dernières une partie, qui est légèrement décalée verticalement et/ou horizontalement par rapport à ce qui a été prédéfini, l'écran d'affichage va afficher systématiquement une image légèrement décalée verticalement et/ou horizontalement. Dans les deux situations précitées, la ligne d'horizon peut se retrouver affichée de façon légèrement inclinée et/ou à une hauteur par rapport au bas de l'écran d'affichage qui n'est pas réglementaire. Par exemple, la ligne d'horizon peut se retrouver affichée en dessous de la hauteur minimale autorisée (actuellement fixée à 90% de la hauteur totale d'affichage par l'UTAC (« Union technique de l'automobile, du motocycle et du cycle »).

Actuellement, la vérification du réglage d'un dispositif de rétrovision numérique nécessite que l'environnement arrière du véhicule soit dégagé sur au moins cinquante mètres pour que la ligne d'horizon apparaisse distinctement sur l'image affichée par son écran d'affichage. Par conséquent, il est impossible actuellement de procéder à ce type de vérification dans un bâtiment fermé, et en particulier en fin de chaîne de montage, ce qui contraint à déplacer le véhicule dans une zone extérieure ouverte et dégagée et donc induit un surcoût et une perte de temps.

Le document EP3107068 A1 divulgue un procédé pour détecter un mauvais alignement d'un châssis de véhicule par utilisation de données d'image d'une caméra de véhicule. Des données d'image sont reçues à partir de la caméra de véhicule, une position d'horizon et une position d'un axe de caméra sont identifiées et utilisées pour la détection du mauvais alignement.

Le document WO2014045344 A1 divulgue un dispositif de réglage de foyer d'extension (FOE) pour une caméra embarquée sur un véhicule, lequel dispositif calcule la position du foyer d'extension (FOE) de la caméra sur la base d'une image d'une cible prédéterminée imagée par la caméra et d'un paramètre d'ajustement entré à partir de l'extérieur. L'invention a donc notamment pour but d'améliorer la situation.

### Présentation de l'invention

Elle propose notamment à cet effet un procédé de réglage destiné à permettre le réglage d'un dispositif de rétrovision numérique équipant un véhicule et comprenant, d'une part, une caméra positionnée dans une partie arrière du véhicule afin d'acquérir des images numériques d'une partie de son environnement arrière, et, d'autre part, un écran d'affichage affichant au moins une partie choisie des images acquises.

Ce procédé de réglage se caractérise par le fait qu'il comprend :
- une première étape dans laquelle on place derrière la partie arrière du véhicule, à une position de réglage prédéfinie par rapport à un élément prédéfini du véhicule, une image qui est représentative d'un environnement comportant une ligne d'horizon, puis on acquiert une image avec la caméra et on affiche sur l'écran d'affichage du véhicule au moins une partie de cette image acquise avec au moins une ligne horizontale située à une hauteur prédéfinie correspondant à une hauteur minimale à laquelle doit être affichée la ligne d'horizon, et
- une seconde étape dans laquelle on règle la position de la caméra et/ou la partie de l'image acquise devant être affichée de sorte que la ligne d'horizon soit affichée sur l'écran d'affichage du véhicule à une hauteur qui est supérieure ou égale à la ligne horizontale,
- dans ladite première étape on place un masque transparent contenant ladite ligne horizontale contre ledit écran d'affichage.

Ainsi, on peut très avantageusement régler le dispositif de rétrovision numérique précisément (et conformément à la règle en vigueur), alors même que le véhicule est placé dans un espace (éventuellement fermé) dont les dimensions sont beaucoup plus petites que celles de l'espace ouvert qui est nécessaire pour effectuer ce même réglage avec un procédé de réglage de l'art antérieur.

Le procédé de réglage selon l'invention peut comporter d'autres caractéristiques qui peuvent être prises séparément ou en combinaison, et notamment :
- dans sa première étape la hauteur minimale peut être située à 90% d'une hauteur totale d'affichage de l'écran d'affichage du véhicule ;
- dans sa première étape l'élément prédéfini peut être une roue arrière du véhicule ;
   > dans sa première étape la position de réglage peut être prédéfinie par une hauteur prédéfinie comprise entre zéro centimètre et deux mètres et une distance prédéfinie comprise entre trois mètres et six mètres ;
- dans sa première étape on peut projeter l'image d'environnement sur un écran qui est installé à une distance prédéfinie définissant au moins partiellement la position de réglage prédéfinie. En variante, dans sa première étape on peut placer un panneau comportant l'image d'environnement à une distance prédéfinie définissant au moins partiellement la position de réglage prédéfinie.

L'invention propose également d'utiliser un procédé de réglage du type de celui présenté ci-avant pour régler un dispositif de rétrovision numérique équipant un véhicule de type automobile.

Par exemple, ce véhicule automobile peut comprendre une partie arrière masquant intégralement un environnement arrière situé derrière elle.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement, dans une vue du dessus, un exemple de véhicule automobile derrière lequel est installé un panneau de réglage et comprenant un dispositif de rétrovision numérique en cours de réglage par un technicien présent temporairement dans l'habitacle et mettant en oeuvre un procédé de réglage selon l'invention,
[Fig. 2] illustre schématiquement, dans une vue en perspective, l'écran d'affichage du dispositif de rétrovision numérique de la figure 1, en cours d'affichage d'une partie d'une image acquise par la caméra arrière pendant la mise en oeuvre du procédé de réglage selon l'invention, et
[Fig. 3] illustre schématiquement un exemple d'algorithme mettant en oeuvre le procédé de réglage selon l'invention.

### Description détaillée de l'invention

L'invention a notamment pour but de proposer un procédé de réglage destiné à permettre le réglage d'un dispositif de rétrovision numérique DR équipant un véhicule V.

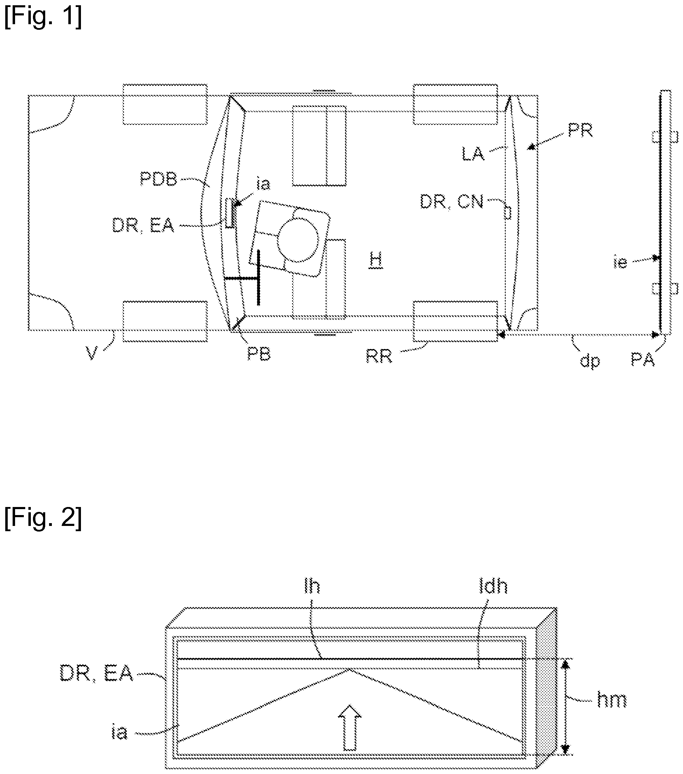

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule devant être équipé d'un dispositif de rétrovision numérique du fait qu'il comprend une partie arrière masquant intégralement son environnement arrière ou dans laquelle la lunette arrière ou la vitre du hayon a une petite surface.

On a schématiquement représenté sur la figure 1 un exemple de véhicule V (ici de type automobile) comprenant un dispositif de rétrovision numérique DR en cours de réglage par un technicien présent temporairement dans l'habitacle H.

Comme illustré sur la figure 1, le dispositif de rétrovision numérique DR comprend au moins une caméra arrière CN et un écran d'affichage EA.

La caméra (arrière) CN est positionnée dans la partie arrière PR du véhicule V. Elle est destinée à acquérir des images numériques d'une partie de l'environnement arrière de son véhicule.

Par exemple, et comme illustré non limitativement sur la figure 1, la caméra CN peut être solidarisée à l'extrémité arrière du toit (ou pavillon) du véhicule V. Mais elle (CN) pourrait être solidarisée à la vitre de la lunette arrière LA (ici de surface réduite) ou sur partie de la carrosserie qui est orientée vers l'arrière du véhicule V et pleine au lieu de comporter une vitre (de hayon ou de lunette arrière ou encore de porte).

On notera que la caméra CN peut éventuellement être utilisée pour au moins une autre fonction assurée par le véhicule, comme par exemple une fonction d'assistance à la conduite (notamment lors de marches arrière).

L'écran d'affichage EA est agencé de manière à afficher au moins une partie choisie des images qui sont acquises par la caméra CN. Cet écran d'affichage est installé dans l'habitacle H du véhicule V en vue directe du conducteur. Par exemple, et comme illustré non limitativement sur la figure 1, l'écran d'affichage EA peut être installé à l'endroit où est habituellement installé le rétroviseur central intérieur (à savoir sur la partie supérieure de la face interne du pare-brise PB ou à l'extrémité avant interne du toit (ou pavillon)). Mais il pourrait être installé dans ou sur la planche de bord PDB du véhicule V ou bien il pourrait s'agir d'une partie du pare-brise PB située devant le conducteur et associée à un dispositif d'affichage tête haute .

Comme indiqué précédemment, l'invention propose notamment de mettre en oeuvre un procédé de réglage destiné à permettre le réglage du dispositif de rétrovision numérique DR du véhicule V.

Ce procédé de réglage comporte des première 10-30 et seconde 40 étapes qui peuvent être mises en oeuvre manuellement et/ou de façon au moins partiellement automatisée par au moins un technicien, éventuellement dans un bâtiment fermé, par exemple en fin de la chaîne de montage du véhicule V.

Dans la première étape 10-30 du procédé de réglage, on commence par placer derrière la partie arrière PR du véhicule V (voir figure 1), à une position de réglage prédéfinie par rapport à un élément prédéfini du véhicule V, une image ie qui est représentative d'un environnement comportant une ligne d'horizon Idh (voir figure 2). Puis, on acquiert une image avec la caméra CN, et on affiche sur l'écran d'affichage EA au moins une partie ia de cette image acquise avec au moins une ligne horizontale Ih (voir figure 2) située à une hauteur prédéfinie hp correspondant à une hauteur minimale hm à laquelle doit être affichée la ligne d'horizon Idh (lorsque le réglage est conforme à la règle en vigueur).

On notera, comme illustré non limitativement sur la figure 2, que l'image d'environnement ie placée peut, par exemple, comprendre au moins la ligne d'horizon Idh et deux traits se rejoignant au niveau de la ligne d'horizon Idh et matérialisant les deux délimitations d'une voie de circulation. Mais on peut utiliser des images d'environnement plus ou moins sophistiquées. Ainsi, l'image d'environnement ie pourrait ne comprendre qu'une ligne d'horizon Idh, par exemple.

On notera également, comme illustré non limitativement sur la figure 1, que dans la première étape 10-30 l'élément prédéfini du véhicule V, par rapport auquel on détermine la position de réglage prédéfinie de l'image d'environnement ie, peut être une roue arrière RR du véhicule V. Mais cette position de réglage prédéfinie peut être déterminée par rapport à d'autres éléments prédéfinis du véhicule V, comme par exemple son extrémité arrière (pare-chocs ou bouclier arrière).

Par exemple, et comme illustré non limitativement sur la figure 1, dans la première étape 10-30, lorsque l'élément prédéfini du véhicule V est une roue arrière RR, la position de réglage peut être prédéfinie par une hauteur prédéfinie comprise entre zéro centimètre et deux mètres et une distance prédéfinie dp comprise entre trois mètres et six mètres. D'une manière générale, la position de réglage est prédéfinie en fonction des dimensions de l'image d'environnement ie et de la focale de la caméra CN.

Dans la seconde étape 40 du procédé de réglage, on règle la position de la caméra CN et/ou la partie de l'image acquise devant être affichée par l'écran d'affichage EA, de sorte que la ligne d'horizon Idh soit affichée à une hauteur qui est supérieure ou égale à la ligne horizontale Ih.

Ainsi, on est sûr que le réglage du dispositif de rétrovision numérique DR va systématiquement fournir des images affichées ia qui sont conformes à la règle en vigueur, par exemple celle de l'UTAC. De plus, ce réglage peut être effectué alors même que le véhicule V est placé dans un espace (éventuellement fermé) dont les dimensions sont beaucoup plus petites que celles de l'espace ouvert qui est nécessaire pour effectuer ce même réglage avec un procédé de réglage de l'art antérieur.

Le réglage du positionnement de la caméra CN peut être effectué manuellement par un technicien, par exemple par action(s) sur des vis de positionnement de la caméra CN et/ou de façon au moins partiellement automatisée lorsque le positionnement de la caméra CN est contrôlable par des moteurs électriques. Le réglage de la partie de l'image acquise devant être affichée par l'écran d'affichage EA peut être effectué manuellement par un technicien, par exemple par des commandes transmises au calculateur de l'écran d'affichage EA et/ou de façon au moins partiellement automatisée, par exemple par un programme qui génère des commandes pour le calculateur de l'écran d'affichage EA en fonction de l'écart entre la ligne d'horizon Idh et la ligne horizontale Ih.

On notera que dans la première étape 10-30 on un masque transparent contenant la ligne horizontale lh est placé contre l'écran d'affichage EA. Dans ce cas, c'est un technicien qui place le masque transparent, de préférence au format exact de la zone d'affichage de l'écran d'affichage EA, contre ce dernier (EA), puis qui détermine l'écart entre la ligne d'horizon Idh et la ligne horizontale Ih et effectue les réglages en fonction de cet écart.

Mais, dans une variante de réalisation illustrée sur la figure 2, dans la première étape 10-30 on peut adjoindre à l'image affichée ia la ligne horizontale Ih. Cette adjonction est réalisée de façon informatique, par exemple en sélectionnant une option d'un menu dédié au réglage du dispositif de rétrovision numérique DR. Cette variante permet aussi bien une détermination de l'écart entre la ligne d'horizon Idh et la ligne horizontale Ih par un technicien puis la réalisation des réglages en fonction de cet écart par ce technicien, qu'une détermination automatisée (ou informatisée) de l'écart entre la ligne d'horizon Idh et la ligne horizontale Ih puis la réalisation des réglages en fonction de cet écart de façon également automatisée ou par un technicien.

Par exemple, dans la première étape 10-30 la hauteur minimale hm à laquelle doit être affichée la ligne d'horizon Idh (et donc à laquelle est placée la ligne horizontale Ih) peut être située à 90% de la hauteur totale d'affichage de l'écran d'affichage EA. Mais il ne s'agit que d'un exemple résultant d'une règle actuellement fixée par l'UTAC, et donc d'autres pourcentages peuvent être utilisés.

On notera également, comme illustré non limitativement sur la figure 1, que dans la première étape 10-30 on peut placer un panneau PA comportant l'image d'environnement ie à une distance prédéfinie dp par rapport à l'élément prédéfini du véhicule V qui définit au moins partiellement la position de réglage prédéfinie. Dans ce cas, le placement du panneau PA (et donc de l'image d'environnement ie) à la position de réglage prédéfinie peut être effectué manuellement par un technicien ou bien de façon automatisée, par exemple par une translation verticale motorisée (de bas en haut via l'ouverture d'une trappe située dans le plancher, ou de haut en bas) ou bien grâce à un robot.

Dans une variante de réalisation, dans la première étape 10-30 on peut projeter l'image d'environnement ie sur un écran qui est installé à une distance prédéfinie dp par rapport à l'élément prédéfini du véhicule V qui définit au moins partiellement la position de réglage prédéfinie. Cette projection peut se faire par l'avant ou par l'arrière (rétroprojection) selon les besoins. Dans cette variante, le placement de l'écran à la position de réglage prédéfinie peut être effectué manuellement par un technicien ou bien de façon automatisée, par exemple par une translation verticale motorisée (de bas en haut via l'ouverture d'une trappe située dans le plancher, ou de haut en bas) ou bien grâce à un robot. La projection de l'image d'environnement ie sur l'écran peut être déclenchée manuellement par le technicien ou de façon automatisée (ou informatisée) consécutivement au placement de l'écran.

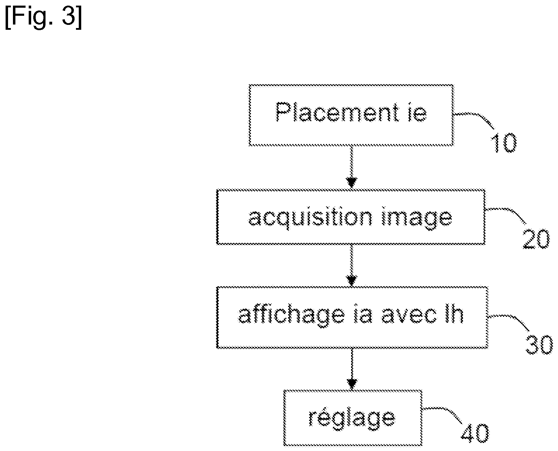

On a schématiquement illustré sur la figure 3 un exemple d'algorithme mettant en oeuvre les première 10-30 et seconde 40 étapes du procédé de réglage décrit ci-avant.

Dans une première sous-étape 10 de la première étape 10-30 on commence par placer derrière la partie arrière PR du véhicule V, à la position de réglage prédéfinie par rapport à un élément prédéfini du véhicule V, l'image d'environnement ie qui comporte une ligne d'horizon Idh.

Dans une deuxième sous-étape 20 de la première étape 10-30 on acquiert une image avec la caméra CN.

Dans une troisième sous-étape 30 de la première étape 10-30 on affiche sur l'écran d'affichage EA au moins une partie ia de cette image acquise avec au moins une ligne horizontale Ih située à une hauteur prédéfinie hp correspondant à une hauteur minimale hm à laquelle doit être affichée la ligne d'horizon Idh.

Dans une seconde étape 40 on règle la position de la caméra CN et/ou la partie de l'image acquise devant être affichée par l'écran d'affichage EA, de sorte que la ligne d'horizon Idh soit affichée à une hauteur qui est supérieure ou égale à la ligne horizontale Ih.

## Revendications

1. Procédé de réglage pour un dispositif de rétrovision numérique (DR) équipant un véhicule (V) et comprenant a) une caméra (CN) positionnée dans une partie arrière (PR) dudit véhicule (V) afin d'acquérir des images numériques d'une partie de son environnement arrière, et b) un écran d'affichage (EA) affichant au moins une partie choisie desdites images acquises, comprenant i) une première étape (10-30) dans laquelle on place derrière ladite partie arrière (PR), à une position de réglage prédéfinie par rapport à un élément prédéfini dudit véhicule (V), une image représentative d'un environnement comportant une ligne d'horizon, puis on acquiert une image avec ladite caméra (CN) et on affiche sur ledit écran d'affichage (EA) au moins une partie de cette image acquise avec au moins une ligne horizontale située à une hauteur prédéfinie correspondant à une hauteur minimale à laquelle doit être affichée ladite ligne d'horizon, et ii) une seconde étape (40) dans laquelle on règle la position de ladite caméra (CN) et/ou ladite partie de l'image acquise devant être affichée de sorte que ladite ligne d'horizon soit affichée à une hauteur supérieure ou égale à ladite ligne horizontale, **caractérisé en ce que** dans ladite première étape (10-30) on place un masque transparent contenant ladite ligne horizontale contre ledit écran d'affichage (EA).

2. Procédé selon la revendication 1, **caractérisé en ce que** dans ladite première étape (10-30) ladite hauteur minimale est située à 90% d'une hauteur totale d'affichage dudit écran d'affichage (EA).

3. Procédé selon l'une des revendications 1 à 2, **caractérisé en ce que** dans ladite première étape (10-30) ledit élément prédéfini est une roue arrière (RR) dudit véhicule (V).

4. Procédé selon la revendication précédente, **caractérisé en ce que** dans ladite première étape (10-30) ladite position de réglage est prédéfinie par une hauteur prédéfinie comprise entre zéro centimètre et deux mètres et une distance prédéfinie comprise entre trois mètres et six mètres.

5. Procédé selon l'une des revendications 1 à 4, **caractérisé en ce que** dans ladite première étape (10-30) on projette ladite image d'environnement sur un écran installé à une distance prédéfinie définissant au moins partiellement ladite position de réglage prédéfinie.

6. Procédé selon l'une des revendications 1 à 4, **caractérisé en ce que** dans ladite première étape (10-30) on place un panneau (PA) comportant ladite image d'environnement à une distance prédéfinie définissant au moins partiellement ladite position de réglage prédéfinie.

7. Utilisation du procédé de réglage selon l'une des revendications précédentes pour régler un dispositif de rétrovision numérique (DR) équipant un véhicule (V) de type automobile.

8. Utilisation selon la revendication précédente, **caractérisé en ce que** ledit véhicule automobile (V) comprend une partie arrière (PR) masquant intégralement un environnement arrière situé derrière elle (PR).

## Patentansprüche

1. Einstellverfahren für eine digitale Rückblickvorrichtung (DR), mit der ein Fahrzeug (V) ausgestattet ist und die a) eine Kamera (CN), die in einem hinteren Teil (PR) des Fahrzeugs (V) positioniert ist, um digitale Bilder eines Teils seiner hinteren Umgebung zu erfassen, und b) einen Anzeigebildschirm (EA), der mindestens einen ausgewählten Teil der erfassten Bilder anzeigt, umfasst, mit i) einem ersten Schritt (10-30), in dem man hinter dem hinteren Teil (PR) an einer vordefinierten Einstellposition in Bezug auf ein vordefiniertes Element des Fahrzeugs (V) ein Bild platziert, das repräsentativ für eine Umgebung mit einer Horizontlinie ist, dann wird ein Bild mit der Kamera (CN) erfasst und auf dem Anzeigeschirm (EA) wird mindestens ein Teil dieses erfassten Bildes mit mindestens einer horizontalen Linie angezeigt, die sich in einer vordefinierten Höhe befindet, die einer Mindesthöhe entspricht, in der die Horizontlinie angezeigt werden muss, und ii) einen zweiten Schritt (40), in dem die Position der Kamera (CN) und/oder der Teil des erfassten Bildes, der angezeigt werden soll, so eingestellt wird, dass die Horizontlinie in einer Höhe angezeigt wird, die größer oder gleich der horizontalen Linie ist, **dadurch gekennzeichnet, dass** in dem ersten Schritt (10-30) eine transparente Maske, die die horizontale Linie enthält, gegen den Anzeigebildschirm (EA) gelegt wird.

2. Verfahren nach Anspruch 1, **dadurch gekennzeichnet, dass** in dem ersten Schritt (10-30) die Mindesthöhe innerhalb von 90% einer Gesamtanzeigehöhe des Anzeigebildschirms (EA) liegt.

3. Verfahren nach einem der Ansprüche 1 bis 2, **dadurch gekennzeichnet, dass** in dem ersten Schritt (10-30) das vordefinierte Element ein Hinterrad (RR) des Fahrzeugs (V) ist.

4. Verfahren nach dem vorhergehenden Anspruch, **dadurch gekennzeichnet, dass** in dem ersten Schritt (10-30) die Einstellposition durch eine vordefinierte Höhe zwischen null Zentimetern und zwei Metern und einen vordefinierten Abstand zwischen drei Metern und sechs Metern vordefiniert ist.

5. Verfahren nach einem der Ansprüche 1 bis 4, **dadurch gekennzeichnet, dass** in dem ersten Schritt (10-30) das Umgebungsbild auf einen Bildschirm projiziert wird, der in einem vordefinierten Abstand installiert ist, der zumindest teilweise die vordefinierte Einstellposition definiert.

6. Verfahren nach einem der Ansprüche 1 bis 4, **dadurch gekennzeichnet, dass** in dem ersten Schritt (10-30) eine Tafel (PA) mit dem Umgebungsbild in einem vordefinierten Abstand aufgestellt wird, der zumindest teilweise die vordefinierte Einstellposition definiert.

7. Verwendung des Einstellverfahrens nach einem der vorhergehenden Ansprüche zum Einstellen einer digitalen Rückblickvorrichtung (DR), mit der ein Fahrzeug (V) vom Typ Automobil ausgestattet ist.

8. Verwendung nach dem vorhergehenden Anspruch, **dadurch gekennzeichnet, dass** das Kraftfahrzeug (V) einen hinteren Teil (PR) umfasst, der eine dahinter liegende hintere Umgebung (PR) vollständig verdeckt.

## Claims

1. An adjustment method for a digital rear view device (DR) fitted to a vehicle (V) and comprising a) a camera (CN) positioned in a rear part (PR) of said vehicle (V) in order to acquire digital images of a part of its rear environment, and b) a display screen (EA) displaying at least a selected part of said acquired images, comprising i) a first step (10-30) in which an image representative of an environment including a horizon line is placed behind said rear portion (PR) at a predefined adjustment position with respect to a predefined element of said vehicle (V) then an image is acquired with said camera (CN) and at least a part of this acquired image is displayed on said display screen (EA) with at least one horizontal line located at a predefined height corresponding to a minimum height at which said horizon line must be displayed, and ii) a second step (40) in which the position of said camera (CN) and/or said portion of the acquired image to be displayed is adjusted so that said horizon line is displayed at a height greater than or equal to said horizontal line, **characterized in that** in said first step (10-30) a transparent mask containing said horizontal line is placed against said display screen (EA).

2. the method according to claim 1, **characterized in that** in said first step (10-30) said minimum height is located at 90% of a total display height of said display screen (EA).

3. The method according to any of claims 1 to 2, **characterized in that** in said first step (10-30) said predefined element is a rear wheel (RR) of said vehicle (V).

4. Method according to the preceding claim, **characterised in that** in said first step (10-30) said setting position is predefined by a predefined height comprised between zero centimetres and two metres and a predefined distance comprised between three metres and six metres.

5. A method according to any of claims 1 to 4, **characterized in that** in said first step (10-30) said environmental image is projected onto a screen installed at a predefined distance defining at least partially said predefined adjustment position.

6. Method according to any of the claims 1 to 4, **characterized in that** in said first step (10-30) a panel (PA) comprising said environment image is placed at a predefined distance defining at least partially said predefined adjustment position.

7. Use of the adjustment method according to any of the preceding claims for adjusting a digital rear-view device (DR) fitted to a vehicle (V) of the automotive type.

8. Use according to the preceding claim, **characterised in that** said motor vehicle (V) comprises a rear part (PR) integrally masking a rear environment located behind it (PR).
